# EUROPEAN PATENT APPLICATION

(11) **EP 4 163 148 A1**
(43) Date of publication of application: **12.04.2023**
(21) Application number: 22806214.7
(22) Date of filing: 25.01.2022
(51) Int. Cl.: B60L 53/00, B60L 3/00, B60L 15/20

(54) **METHOD AND APPARATUS FOR CONTROLLING CHARGING, POWERING ON AND POWERING OFF OF ELECTRIC VEHICLE, AND ELECTRIC VEHICLE**

(30) Priority: 11.05.2021 CN 202110513292
(71) Applicant: Zhejiang Sany Equipment Co., LTD, Huzhou, Zhejiang 313028 (CN)
(72) Inventor: YU, Xiaobin, Huzhou, Zhejiang 313028 (CN); ZHU, Xiuhui, Huzhou, Zhejiang 313028 (CN); SHEN, Bin, Huzhou, Zhejiang 313028 (CN)
(74) Representative: Murgitroyd & Company
(86) International application number: PCT/CN2022/073786
(87) International publication number: WO 2022/237237

(57) **Abstract**

Disclosed are a method and apparatus for controlling the charging, powering on and powering off of an electric vehicle and the electric vehicle. The method includes: determining a complete machine state of an electric vehicle according to a power-on signal or power-off signal of the electric vehicle, where the complete machine state is any one of a power outage BMS charging mode, a power-on BMS charging mode, a power outage BAT charging mode, a whole machine power-on mode and a whole machine power-off mode; determining corresponding control timing logic according to the complete machine state of the electric vehicle, and executing a corresponding operation flow according to the control timing logic, where the operation procedure includes any one of a charging operation procedure, a power-on operation procedure and a power-off operation procedure. After the complete machine state of the electric vehicle is determined, a corresponding operation procedure may be executed based on the control timing logic corresponding to the complete machine state, so that the electric vehicle may be automatically charged, powered on or powered off, so as to avoid a problem of adhesion or even damage caused due to current of various contactors being excessive during an abnormal operation.

## Description

### CROSS-REFERENCE TO RELATED APPLICATIONS

The present application claims priority to the Chinese Patent Application NO. 202110513292.9, entitled "Method and apparatus for controlling charging, powering on and powering off of electric vehicle, and electric vehicle", filed on May 11, 2021, the content of which is incorporated herein by reference in entirety.

### TECHNICAL FIELD

The present disclosure relates to the technical field of electric vehicles, in particular, to a method and apparatus for controlling charging, powering on and powering off of an electric vehicle, and an electric vehicle.

### BACKGROUND

With the rise and development of the electric vehicle industry, for all walks of life, existing engines are being replaced by battery power packs, which can not only improve energy efficiency, but also reduce shock and noise.

Therefore, control timing of power-on and power-off, starting up and charging of the battery power pack of the electric vehicle is particularly important. For different electric vehicles, the control timing of the whole vehicle is different. In the conventional technology, abnormal operations may occur during timing control of the whole vehicle, resulting in adhesion, normal close or even damage to various contactors.

### SUMMARY

The present disclosure provides a method and apparatus for controlling charging, powering on and powering off of an electric vehicle and an electric vehicle, which are used to solve the problem in the conventional technology that when an electric vehicle is charged, powered on and powered off, parts are easy to be damaged.

The present disclosure provides a method for controlling charging, powering on and powering off of an electric vehicle, which is applied to a control unit of an electric vehicle, including:
determining a complete machine state of the electric vehicle according to a power-on signal or a power-off signal of the electric vehicle, the complete machine state including any one of a power outage battery management system (BMS) charging mode, a power-on BMS charging mode, a power outage battery (BAT) charging mode, a whole machine power-on mode and a whole machine power-off mode; and
determining corresponding control timing logic according to the complete machine state of the electric vehicle, and executing a corresponding operation procedure according to the control timing logic, the operation procedure including any one of a charging operation procedure, a power-on operation procedure and a power-off operation procedure.

According to the method for controlling charging, powering on and powering off of an electric vehicle provided by the present disclosure, if the complete machine state of the electric vehicle is the power outage BMS charging mode, the executing a corresponding operation procedure according to the control timing logic includes:
after receiving a charging instruction, sequentially controlling a low-voltage signal of a high-voltage control box of the electric vehicle to be powered on and a main negative contactor to be powered on; and
after the main negative contactor is powered on, controlling a slow charging contactor of a high-voltage charging gun of the electric vehicle to be powered on, and controlling a high-voltage signal of the high-voltage control box to be powered on to enable BMS of the electric vehicle to charge a battery of the electric vehicle by the high-voltage control box, and controlling a cooling system of the electric vehicle to perform cooling.

According to the method for controlling charging, powering on and powering off of an electric vehicle provided by the present disclosure, if the complete machine state of the electric vehicle is the power-on BMS charging mode, the executing a corresponding operation procedure according to the control timing logic includes:
controlling a slow charging contactor to be powered on, and charging a battery of the electric vehicle according to an on-off state of a microcontroller unit of the electric vehicle, and controlling a cooling system of the electric vehicle to perform cooling.

According to the method for controlling charging, powering on and powering off of an electric vehicle provided by the present disclosure, the charging the battery of the electric vehicle according to an on-off state of a microcontroller unit of the electric vehicle includes:
if the on-state of the microcontroller unit is on, controlling the BMS to charge the battery of the electric vehicle in an alternating current (AC) recharge mode; and
if the on-state of the microcontroller unit is off, controlling the BMS to charge the battery of the electric vehicle in an AC charging mode.

According to the method for controlling charging, powering on and powering off of an electric vehicle provided by the present disclosure, if the complete machine state of the electric vehicle is the power outage BAT charging mode, the executing a corresponding operation procedure according to the control timing logic includes:
sequentially controlling a low-voltage signal of a high-voltage control box and a main negative contactor to be powered on; and
after the main negative contactor is powered on, controlling a high-voltage signal of the high-voltage control box to be powered on, to enable that when a power capacity of a battery of the electric vehicle is less than a first threshold, the BMS charges the battery of the electric vehicle by the high-voltage control box until the power capacity of the battery of the electric vehicle reaches a second threshold, where the first threshold is lower than the second threshold.

According to the method for controlling charging, powering on and powering off of an electric vehicle provided by the present disclosure, if the complete machine state of the electric vehicle is the whole machine power-on mode, the executing a corresponding operation procedure according to the control timing logic includes:
after a low-voltage signal of a high-voltage control box and a low-voltage signal of a microcontroller unit are controlled to be powered on, sequentially controlling a main negative contactor and a pre-charge contactor to be powered on; and
after the pre-charge contactor is powered on, controlling a high-voltage signal of the high-voltage control box to be powered on, controlling a PTC contactor to be powered on, controlling a cooling system to perform cooling, and when a motor voltage is greater than a threshold voltage, sequentially controlling a main positive contactor of the electric vehicle to be powered on and the pre-charging contactor to be powered off, where
after the controlling a main negative contactor to be powered on, the executing a corresponding operation procedure according to the control timing logic further includes:
   if a motor of the electric vehicle is in a starting state, controlling a high-voltage signal of the microcontroller unit to be powered on.

According to the method for controlling charging, powering on and powering off of an electric vehicle provided by the present disclosure, if the complete machine state of the electric vehicle is the whole machine power-on mode, the executing a corresponding operation procedure according to the control timing logic further includes:
obtaining a running state of the electric vehicle in real time, the running state comprising a state of the BMS, a state of a microcontroller unit and a state of a high-voltage control box; and
performing a fault processing if the running state does not meet a preset condition, the fault processing comprising at least one of reducing torque, reducing speed, turning off the motor, and controlling power-off of the BMS.

According to the method for controlling charging, powering on and powering off of an electric vehicle provided by the present disclosure, if the complete machine state of the electric vehicle is the whole machine power-off mode, the executing a corresponding operation procedure according to the control timing logic includes:
controlling a high-voltage signal of the microcontroller unit of the electric vehicle to be powered off, to sequentially control a main positive relay of the electric vehicle to be powered off, a high-voltage signal of the high-voltage control box to be powered off, a low-voltage signal of the high-voltage control box to be powered off with time delay and a low-voltage signal of the microcontroller unit to be powered off, and when the main positive contactor, pre-charge contactor, slow charging contactor and PTC contactor of the electric vehicle are all powered off, controlling the main negative contactor to be powered off.

The present disclosure also provides apparatus for controlling charging, powering on and powering off of an electric vehicle, where the apparatus is provided in the control unit of the electric vehicle and includes:
a state determination module, configured to determine a complete machine state of the electric vehicle according to a power-on signal or a power-off signal of the electric vehicle, the complete machine state including any one of a power outage BMS charging mode, a power-on BMS charging mode, a power outage BAT charging mode, a whole machine power-on mode and a whole machine power-off mode; and
a control module, configured to determine a corresponding control timing logic according to the complete machine state of the electric vehicle, and execute a corresponding operation procedure according to the control timing logic, the operation procedure including any one of a charging operation procedure, a power-on operation procedure and a power-off operation procedure.

The present disclosure also provides an electric vehicle, including: the above-mentioned apparatus for controlling charging, powering on and powering off of an electric vehicle.

The present disclosure also provides an electronic device, including a memory, a processor, and a computer program stored in the memory which may be executed by the processor. When the processor executes the computer program, any of the above-mentioned steps of the method for controlling charging, powering on and powering off of an electric vehicle is performed.

The present disclosure also provides a non-transitory computer-readable storage medium, on which a computer program is stored, and when the computer program is executed by a processor, any step of the method for controlling charging, powering on and powering off of an electric vehicle is performed.

According to the method for controlling charging, powering on and powering off of an electric vehicle provided in the present disclosure, after the complete machine state of the electric vehicle is determined, corresponding operation procedure may be executed based on the control timing logic corresponding to the complete machine state, to automatically charge, power on or power off the electric vehicle and avoid the problem of adhesion or even damage to various contactors due to excessive current caused by abnormal operation.

### BRIEF DESCRIPTION OF THE DRAWINGS

To clearly illustrate technical solutions of the present disclosure, accompanying drawings used in description of embodiments or the prior art will be briefly introduced below. Obviously, the accompanying drawings in the following description are some embodiments of the disclosure, and for those skilled in the art, other drawings may also be obtained based on these drawings without creative work.
FIG. 1 is a schematic flowchart of a method for controlling charging, powering on and powering off of an electric vehicle provided by the present disclosure.
FIG. 2 is a schematic flow chart of another method for controlling charging, powering on and powering off of an electric vehicle provided by the present disclosure.
FIG. 3 is a structural schematic diagram of a system for controlling the charging, powering on and powering off of an electric vehicle provided by the present disclosure.
FIG. 4 is a structural schematic diagram of apparatus for controlling the charging, powering on and powering off of an electric vehicle provided by the present disclosure.
FIG. 5 is a structural schematic diagram of an electronic device provided by the present disclosure.

### DETAILED DESCRIPTION OF THE EMBODIMENTS

In order to make the purpose, technical solutions and advantages of the present disclosure clearer, the technical solutions in the present disclosure will be clearly and completely described below in combination with the accompanying drawings in this disclosure. Obviously, the described embodiments are part of the embodiments of this disclosure, but not all embodiments. Based on the embodiments in this disclosure, all other embodiments obtained by those skilled in the art without creative efforts fall within the protection scope of this disclosure.

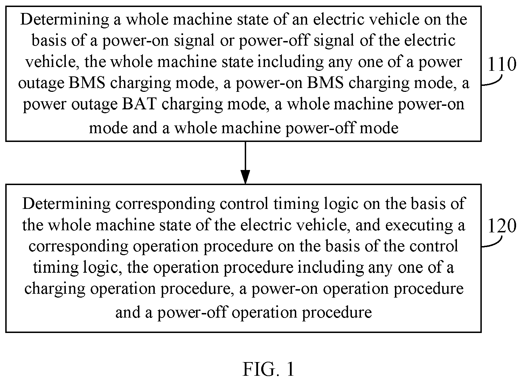

The present disclosure provides a method for controlling charging, powering on and powering off of an electric vehicle, which is applied to a vehicle control unit (VCU). FIG. 1 is a schematic flowchart of a method for controlling charging, powering on and powering off of an electric vehicle provided by the present disclosure. As shown in FIG. 1, the method includes the following steps.

Step 110, determining a complete machine state of the electric vehicle according to a power-on signal or a power-off signal of the electric vehicle, the complete machine state including any one of a power outage battery management system (BMS) charging mode, a power-on BMS charging mode, a power outage battery (BAT) charging mode, a whole machine power-on mode and a whole machine power-off mode.

Specifically, the vehicle control unit (VCU) of the electric vehicle may obtain the complete machine state of the electric vehicle in real time from the power-on signal or the power-off signal. For example, after the VCU detects the power-on signal, the VCU will determine whether the electric vehicle is in the power outage BMS charging mode, or the power-on BMS charging mode, or the power outage BAT charging mode, or the whole machine power-on mode. If the power-off signal is detected by the VCU, the VCU will determine whether the electric vehicle is in a normal whole machine power-off mode or an abnormal power-off mode. The abnormal power-off mode usually occurs when the BMS, a microcontroller unit (MCU), a high-voltage control box (DCDC), or etc. of the electric vehicle fail.

Step 120, determining corresponding control timing logic according to the complete machine state of the electric vehicle, and executing a corresponding operation procedure according to the control timing logic, the operation procedure including any one of a charging operation procedure, a power-on operation procedure and a power-off operation procedure.

Specifically, after the complete machine state of the electric vehicle is determined, the control timing logic corresponding to each complete machine state may be determined, namely the power outage BMS charging mode, the power-on BMS charging mode, the power outage BAT charging mode, the whole machine power-on mode and the whole machine power-off mode respectively correspond to different control timing logic, and the control timing logic may be preset control timing logic and may be programmed into the VCU, so that according to the corresponding control timing logic, the VCU may control the corresponding parts of the electric vehicle to execute the corresponding operation procedure, such as the charging operation procedure, the power-on operation procedure, and the power-off operation procedure.

According to the method for controlling charging, powering on and powering off of an electric vehicle provided in the embodiment of the present disclosure, after the complete machine state of the electric vehicle is determined, the corresponding operation procedure based on the control timing logic corresponding to the complete machine state is executed to automatically charge, power on or power off the electric vehicle, to avoid the problem of adhesion or even damage of various contactors caused by excessive current due to abnormal operation.

According to any of the above embodiments, if the complete machine state of the electric vehicle is the power outage BMS charging mode, the executing a corresponding operation procedure according to the control timing logic includes:
after receiving a charging instruction, sequentially controlling a low-voltage signal of a high-voltage control box of the electric vehicle to be powered on and a main negative contactor to be powered on; and
after the main negative contactor is powered on, controlling a slow charging contactor of a high-voltage charging gun of the electric vehicle to be powered on, and controlling a high-voltage signal of the high-voltage control box to be powered on to enable the BMS of the electric vehicle to charge a battery of the electric vehicle by the high-voltage control box, and controlling a cooling system of the electric vehicle to perform cooling.

Specifically, if the VCU judges that the complete machine state of the electric vehicle is the power outage BMS charging mode, the battery of the electric vehicle needs to be charged. In this case, the VCU will detect whether an on-board charger (OBC) is in place. If so, a human-machine interface (HMI) is woken up, and the user sends a charging instruction to the VCU through the HMI, so that the VCU wakes up the BMS to charge the BAT. The charging instruction will carry relevant information of the charging current.

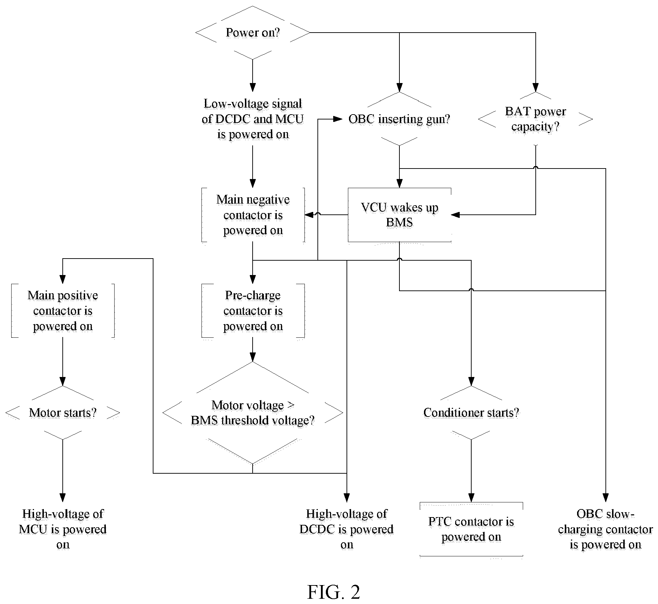

As shown in FIG. 2, after the VCU receives the charging instruction, if the VCU detects that the OBC is in place, the VCU will control a low-voltage signal of the DCDC to be powered on. After the low-voltage signal of the DCDC is powered on, a main negative contactor may be controlled to be powered on. At this time, the VCU controls a slow charging contactor of the OBC to be powered on according to the charging current information carried in the charging instruction. Meanwhile, a high-voltage signal of the DCDC is powered on to enable the BMS to charge the BAT using direct current transferred by the DCDC. And the VCU controls a cooling water system (CWS) according to the temperature of the electric vehicle to achieve water cooling.

According to the method for controlling charging, powering on and powering off of an electric vehicle provided in the embodiment of the present disclosure, if it is determined that the complete machine state of the electric vehicle is the power outage BMS charging mode, the electric vehicle is automatically charged following the corresponding control timing logic procedure, to avoid the problem of adhesion or even damage of various contactors caused by excessive current due to abnormal operation.

According to the above embodiments, if the complete machine state of the electric vehicle is the power-on BMS charging mode, the executing a corresponding operation procedure according to the control timing logic includes:
controlling a slow charging contactor to be powered on, and charging a battery of the electric vehicle according to an on-off state of a microcontroller unit of the electric vehicle, and controlling a cooling system of the electric vehicle to perform cooling.

Specifically, if the VCU judges that the complete machine state of the electric vehicle is the power-on BMS charging mode, the battery of the electric vehicle needs to be charged. At this time, the VCU will detect whether the OBC is in place. If so, the VCU controls the slow charging contactor of the OBC to be powered on, and determines, according to an on-off state of the MCU, a charging mode used by the BMS to charge the BAT. Meanwhile, the VCU controls the CWS to perform water cooling according to the temperature of the whole machine.

As shown in FIG. 2, the VCU detects the power-on signal, a gun inserting state of the OBC, and controls the charging mode of the BMS according to the on-state of the MCU. At this time, the slow charging contactor of the OBC is controlled to be powered on. Meanwhile, depending on whether the MCU is started, it is determined whether the charging mode is an alternating current (AC) charging mode or an alternating current (AC) recharge mode. If the MCU is in an on state, the BAT is charged in the AC recharge mode. If the MCU is in an off state, the BAT is charged in the AC charging mode. And the VCU controls the CWS according to the temperature of the whole machine to realize water cooling.

According to any of the above embodiments, the charging the battery of the electric vehicle according to an on-off state of a microcontroller unit of the electric vehicle includes:
if the on-state of the microcontroller unit is on, controlling the BMS to charge the battery of the electric vehicle in an AC recharge mode; and
if the on-state of the microcontroller unit is off, controlling the BMS to charge the battery of the electric vehicle in an AC charging mode.

Specifically, if the MCU is in the on state, indicating that the MCU is working and the power capacity is consumed fast, the BAT needs to be charged quickly, so the BAT is charged in the AC recharge mode. If the MCU is in the off state, indicating that the MCU is not working, and the power capacity is consumed slower than when the MCU is working. At this time, in order to ensure the service life of the BAT, the BAT may be charged in the AC charging mode.

According to any of the above embodiments, if the complete machine state of the electric vehicle is the power outage BAT charging mode, the executing a corresponding operation procedure according to the control timing logic includes:
sequentially controlling a low-voltage signal of a high-voltage control box and a main negative contactor to be powered on; and
after the main negative contactor is powered on, controlling a high-voltage signal of the high-voltage control box to be powered on, to enable that when a power capacity of a battery of the electric vehicle is less than a first threshold, the BMS charges the battery of the electric vehicle by the high-voltage control box until the power capacity of the battery of the electric vehicle reaches a second threshold, where the first threshold is lower than the second threshold.

Specifically, if the complete machine state of the electric vehicle is the power outage BAT charging mode, and if the power capacity of the BAT state of charge (SOC) is less than the first threshold, it indicates that a power capacity of the BAT is insufficient, and the BMS needs to charge the BAT until the power capacity of the BAT reaches the second threshold. The first threshold and the second threshold may be set according to specific situations, which are not specifically limited in this embodiment of the present disclosure.

As shown in FIG. 2, if the power capacity of the BAT is less than the first threshold, the BMS is woken up and the low-voltage signal of the DCDC is powered on. After the low-voltage signal of the DCDC is powered on, the main negative contactor is powered on, and then the high-voltage signal of the DCDC is controlled to be powered on to control the BMS to charge the BAT using direct current transferred by the DCDC. Meanwhile, the VCU controls the CWS to realize water cooling according to the temperature of the whole machine.

According to the embodiment of the present disclosure, when the power capacity of the BAT is insufficient, the BMS may be actively woken up and the DCDC may be used to transfer to DC to protect the BAT, and the BAT may be charged at a low-voltage while powered off to prevent power feeding.

According to any of the above embodiments, if the complete machine state of the electric vehicle is the whole machine power-on mode, the executing a corresponding operation procedure according to the control timing logic includes:
after a low-voltage signal of a high-voltage control box and a low-voltage signal of a microcontroller unit are controlled to be powered on, sequentially controlling a main negative contactor and a pre-charge contactor to be powered on; and
after the pre-charge contactor is powered on, controlling a high-voltage signal of the high-voltage control box to be powered on, controlling a PTC contactor to be powered on, controlling a cooling system to perform cooling, and when a motor voltage is greater than a threshold voltage, sequentially controlling a main positive contactor of the electric vehicle to be powered on and the pre-charging contactor to be powered off.

Therein, after the controlling a main negative contactor to be powered on, the executing a corresponding operation procedure according to the control timing logic further includes:
if a motor of the electric vehicle is in a starting state, controlling a high-voltage signal of the microcontroller unit to be powered on.

As shown in FIG. 2, if the VCU detects the power-on signal and learns that the complete machine state of the electric vehicle is the whole machine power-on mode, the low-voltage signal of the DCDC and the low-voltage signal of the MCU are controlled to be powered on, and then the main negative contactor is controlled to be powered on. After the main negative contactor is powered on, the pre-charge contactor is powered on, and the VCU detects a motor voltage (MCU side voltage) and a threshold voltage of the BMS. If the motor voltage is greater than the threshold voltage of the BMS, after the main positive contactor is powered on, the pre-charge contactor is powered off. The high-voltage signal of the DCDC is synchronously powered on, and the VCU controls, according to a motor starting signal, the high-voltage signal of the MCU to be powered on to start the motor. Meanwhile, the VCU controls the CWS to realize water cooling according to the temperature of the whole machine. Synchronously, the VCU detects a PTC controller instruction to control the PTC contactor to be powered on to start the air conditioning heating or cooling system.

Therein, the VCU controls, according to the motor start signal, the high-voltage signal of the MCU to be powered on, that is, if the motor is in a starting state, the high-voltage signal of the MCU is controlled to be powered on, and then the motor is started.

According to any of the above embodiments, if the complete machine state of the electric vehicle is the whole machine power-on mode, the executing a corresponding operation procedure according to the control timing logic further includes:
obtaining a running state of the electric vehicle in real time, the running state comprising a state of the BMS, a state of a microcontroller unit and a state of a high-voltage control box; and
performing a fault processing if the running state does not meet a preset condition, the fault processing comprising at least one of reducing torque, reducing speed, turning off the motor, and controlling power-off of the BMS.

Specifically, in the process of whole machine power-on mode, the VCU detects the state of the BMS, the state of the MCU and the state of the DCDC in real time to control a normal operation of the whole vehicle. Once the VCU detects that the running state does not meet the preset condition, it is indicated that there is an abnormal fault. In this case, torque reduction, speed reduction, and turning off the motor, or even directly powering off the BMS may be performed depending on faults or abnormalities, thereby avoiding whole machine crash and accidents caused by the abnormalities and faults. For example, if a failure level is divided into level 1, level 2, level 3 and level 4 (the level 4 of the failure level is the highest), when the failure level is level 1, torque reduction may be implemented; when the failure level is level 2, torque reduction and speed reduction may be implemented; when the failure level is level 3, the torque reduction, the speed reduction and turning off the motor may be implemented; when the failure level is level 4, the torque reduction, the speed reduction, turning off the motor and powering off the BMS may be implemented.

According to any of the above embodiments, if the complete machine state of the electric vehicle is the whole machine power-off mode, the executing a corresponding operation procedure according to the control timing logic includes:
controlling a high-voltage signal of the microcontroller unit of the electric vehicle to be powered off, to sequentially control a main positive relay of the electric vehicle to be powered off, a high-voltage signal of the high-voltage control box to be powered off, a low-voltage signal of the high-voltage control box to be powered off with time delay and a low-voltage signal of the microcontroller unit to be powered off, and when the main positive contactor, pre-charge contactor, slow charging contactor and PTC contactor of the electric vehicle are all powered off, controlling the main negative contactor to be powered off.

Specifically, if the complete machine state of the electric vehicle is the whole machine power-off mode, the VCU detects the power-off signal and controls the high-voltage signal of the MCU to be powered off. At this time, the motor stops. After the motor stops, the main positive contactor is powered off, and then the high-voltage signal of the DCDC is controlled to be powered off. The low-voltage signal of the DCDC is controlled to be powered off with time delay after it is detected that the high-voltage signal of the DCDC is powered off. The low-voltage signal of the MCU is controlled to be powered off after it is detected that the low-voltage signal of the DCDC is powered off in a delayed state (MCU may be a capacitive discharge). When the VCU detects that the low-voltage signal of the DCDC, the low-voltage signal of the MCU, the high-voltage signal of the DCDC, the high-voltage signal of the MCU, main positive contactor status, pre-charge contactor status, slow charging contactor of the OBC conversion, and the PTC contactor status are all in a state of de-energization, the main negative contactor of the BMS is controlled to be powered off.

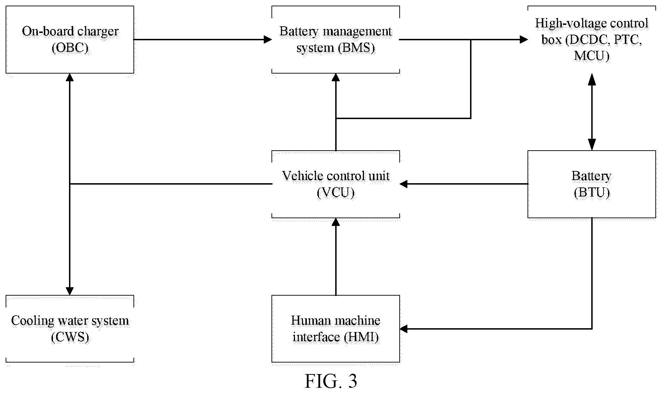

According to any of the above embodiments, the present disclosure also provides a system for controlling charging, powering on and powering off an electric vehicle. As shown in FIG. 3, the system includes a battery management system (BMS), a cooling water system (CWS), an on-board charger (OBC), a high-voltage control box (DCDC, PTC), a vehicle control unit (VCU), human-machine interface (HMI), and battery (BAT); the BMS is charged by the OBC, and the BMS is converted to DC 24V by the DCDC to charge the BAT, while the BMS supplies high-voltage power to the DCDC, the PTC and the MCU, and the BAT supplies low-voltage power to the DCDC, the MCU, the HMI and the VCU. The system includes timing logic control of power-on, power-off and charging between a positive contactor, a negative contactor, a pre-charge contactor, a slow charging contactor, a PTC contactor, an MCU contactor, a DCDC contactor, the low-voltage signal of the MCU, the low-voltage signal of the DCDC, the low voltage wake-up signal of the BMS and the VCU.

Apparatus for controlling charging, power-on and power-off of an electric vehicle provided by the present disclosure is described below. The apparatus for controlling charging, power-on and power-off of an electric vehicle described below may be referred to the method for controlling charging, powering on and powering off of an electric vehicle described above correspondingly.

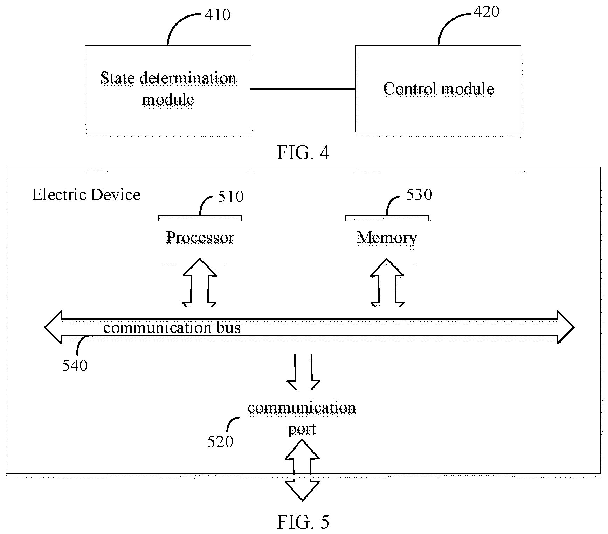

According to any one of the above embodiments, the present disclosure also provides apparatus for controlling charging, power-on and power-off of an electric vehicle, which is provided in the control unit of the electric vehicle, as shown in FIG. 4, the apparatus includes:
a state determination module 410, configured to determine a complete machine state of the electric vehicle according to a power-on signal or a power-off signal of the electric vehicle, the complete machine state including any one of a power outage BMS charging mode, a power-on BMS charging mode, a power outage BAT charging mode, a whole machine power-on mode and a whole machine power-off mode; and
a control module 420, configured to determine a corresponding control timing logic according to the complete machine state of the electric vehicle, and execute a corresponding operation procedure according to the control timing logic, the operation procedure including any one of a charging operation procedure, a power-on operation procedure and a power-off operation procedure.

According to any one of the above embodiments, if the complete machine state of the electric vehicle is the power outage BMS charging mode, the control module 420 is also used for:
after receiving a charging instruction, sequentially controlling a low-voltage signal of a high-voltage control box of the electric vehicle to be powered on and a main negative contactor to be powered on; and
after the main negative contactor is powered on, controlling a slow charging contactor of a high-voltage charging gun of the electric vehicle to be powered on, and controlling a high-voltage signal of the high-voltage control box to be powered on to enable the BMS of the electric vehicle to charge a battery of the electric vehicle by the high-voltage control box, and controlling a cooling system of the electric vehicle to perform cooling.

According to any of the above embodiments, if the complete machine state of the electric vehicle is power-on BMS charging mode, the control module 420 is also used for:
controlling a slow charging contactor to be powered on, and charging a battery of the electric vehicle according to an on-off state of a microcontroller unit of the electric vehicle, and controlling a cooling system of the electric vehicle to perform cooling.

According to any of the above embodiments, the control module 420 includes:
a first charging module, configured to control the BMS to charge the battery of the electric vehicle in an alternating current (AC) recharge mode, if the on-off state of the microcontroller unit is on; and
a second charging module, configured to control the BMS to charge the battery of the electric vehicle in an AC charging mode, if the on-off state of the microcontroller unit is off.

According to any one of the above embodiments, if the complete machine state of the electric vehicle is power outage BAT charging mode, the control module 420 is also used for:
sequentially controlling a low-voltage signal of a high-voltage control box and a main negative contactor to be powered on; and
after the main negative contactor is powered on, controlling a high-voltage signal of the high-voltage control box to be powered on, to enable that when a power capacity of a battery of the electric vehicle is less than a first threshold, the BMS charges the battery of the electric vehicle by the high-voltage control box until the power capacity of the battery of the electric vehicle reaches a second threshold, where the first threshold is lower than the second threshold.

According to any one of the above embodiments, if the complete machine state of the electric vehicle is whole machine power-on mode, the control module 420 is also used for:
after a low-voltage signal of a high-voltage control box and a low-voltage signal of a microcontroller unit are controlled to be powered on, sequentially controlling a main negative contactor and a pre-charge contactor to be powered on; and
after the pre-charge contactor is powered on, controlling a high-voltage signal of the high-voltage control box to be powered on, controlling a PTC contactor to be powered on, controlling a cooling system to perform cooling, and when a motor voltage is greater than a threshold voltage, sequentially controlling a main positive contactor of the electric vehicle to be powered on and the pre-charging contactor to be powered off, where
after the controlling a main negative contactor to be powered on, the executing a corresponding operation procedure according to the control timing logic further includes:
   if a motor of the electric vehicle is in a starting state, controlling a high-voltage signal of the microcontroller unit to be powered on.

According to any one of the above embodiments, the apparatus further includes:
a monitoring module, configured to obtain a running state of the electric vehicle in real time, the running state comprising a state of the BMS, a state of a microcontroller unit and a state of a high-voltage control box; and
a fault processing module, configured to a fault processing if the running state does not meet a preset condition, the fault processing comprising at least one of reducing torque, reducing speed, turning off the motor, and controlling power-off of the BMS.

According to any one of the above embodiments, if the complete machine state of the electric vehicle is whole machine power-off mode, the control module 420 is also used for:
controlling a high-voltage signal of the microcontroller unit of the electric vehicle to be powered off, to sequentially control a main positive relay of the electric vehicle to be powered off, a high-voltage signal of the high-voltage control box to be powered off, a low-voltage signal of the high-voltage control box to be powered off with time delay and a low-voltage signal of the microcontroller unit to be powered off, and when the main positive contactor, pre-charge contactor, slow charging contactor and PTC contactor of the electric vehicle are all powered off, controlling the main negative contactor to be powered off.

According to any one of the above embodiments, the present disclosure further provides an electric vehicle, including the apparatus for controlling charging, power-on and power-off of the electric vehicle.

The electric vehicle provided in the embodiment of the present disclosure can automatically charge, power on and power off the electric vehicle according to the corresponding control timing logic process, avoiding the problem of adhesion or even damage of various contactors caused by excessive current due to abnormal operation.

FIG. 5 is a structural schematic diagram of an electronic device provided by the present disclosure. As shown in FIG. 5, the electronic device may include: a processor 510, a communication interface 520, a memory 530, and a communication bus 540, the processor 510, the communication interface 520, and the memory 530 communicating with each other through the communication bus 540. The processor 510 may call logic instructions stored in the memory 530 to execute a method for controlling charging, powering on and powering off of an electric vehicle, and the method includes: determining a complete machine state of an electric vehicle according to a power-on signal or power-off signal of the electric vehicle, where the complete machine state is any one of a power outage BMS charging mode, a power-on BMS charging mode, a power outage BAT charging mode, a whole machine power-on mode and a whole machine power-off mode; determining corresponding control timing logic according to the complete machine state of the electric vehicle, and executing a corresponding operation procedure according to the control timing logic, where the operation procedure includes any one of a charging operation procedure, a power-on operation procedure and a power-off operation procedure.

In addition, the above logic instructions stored in the memory 530 may be implemented in the form of software function units and be stored in a computer-readable storage medium when sold or used as an independent product. Based on this understanding, the technical solution of the present disclosure is essentially or the part that contributes to the prior art or the part of the technical solution can be embodied in the form of a software product, and the computer software product is stored in a storage medium, including several instructions are used to make a computer device (which may be a personal computer, a server, or a network device, etc.) execute all or part of the steps of the methods described in the various embodiments of the present disclosure. The storage media includes: USB disks, mobile hard disks, read-only memory (ROM), random access memory (RAM), magnetic disks or optical disks and other media that can store program codes.

On the other hand, the present disclosure also provides a computer program product, the computer program product includes a computer program stored on a non-transitory computer-readable storage medium, the computer program includes program instructions, and when the program instructions are executed by a computer, the computer can execute the method for controlling charging, powering on and powering off of an electric vehicle provided by the above methods, the method includes: determining a complete machine state of the electric vehicle according to a power-on signal or a power-off signal of the electric vehicle, the complete machine state including any one of a power outage battery management system (BMS) charging mode, a power-on BMS charging mode, a power outage battery (BAT) charging mode, a whole machine power-on mode and a whole machine power-off mode; and determining corresponding control timing logic according to the complete machine state of the electric vehicle, and executing a corresponding operation procedure according to the control timing logic, the operation procedure including any one of a charging operation procedure, a power-on operation procedure and a power-off operation procedure.

In yet another aspect, the present disclosure also provides a non-transitory computer-readable storage medium, on which a computer program is stored, and when the computer program is executed by a processor, it is implemented to perform the method for controlling charging, powering on and powering off of an electric vehicle, the method includes: determining a complete machine state of the electric vehicle according to a power-on signal or a power-off signal of the electric vehicle, the complete machine state including any one of a power outage battery management system (BMS) charging mode, a power-on BMS charging mode, a power outage battery (BAT) charging mode, a whole machine power-on mode and a whole machine power-off mode; and determining corresponding control timing logic according to the complete machine state of the electric vehicle, and executing a corresponding operation procedure according to the control timing logic, the operation procedure including any one of a charging operation procedure, a power-on operation procedure and a power-off operation procedure.

The device embodiments described above are only illustrative, and the units described as separate components may or may not be physically separated, and the components shown as units may or may not be physical units, that is, they may be located in one place, or it can be distributed to multiple network elements. Part or all of the modules can be selected according to actual needs to achieve the purpose of the solution of this embodiment. It can be understood and implemented by those skilled in the art without any creative efforts.

By the above description of the implementations, those skilled in the art can clearly understand that each embodiment can be implemented by means of software plus a necessary general hardware platform, and also by hardware. Based on this understanding, the above-mentioned technical solution essentially or the part that contributes to the prior art can be embodied in the form of a software product, and the computer software product can be stored in a computer-readable storage medium, such as ROM/ RAM, magnetic disk CD, CD, etc., including several instructions to make a computer device (which may be a personal computer, server, or network device, etc.) execute the methods described in various embodiments or some parts of the embodiments.

Finally, it should be noted that: the above embodiments are only used to illustrate the technical solutions of the present disclosure, rather than limiting them; although the present disclosure has been described in detail with reference to the foregoing embodiments, those of ordinary skill in the art should understand that: modifications can still be made to the technical solutions described in the foregoing embodiments, or equivalent replacements can still be made to some of the technical features; and these modifications or replacements do not make the essence of the corresponding technical solutions deviate from the spirit and scope of the technical solutions of the various embodiments of the present disclosure.

## Claims

1. A method for controlling charging, powering on and powering off of an electric vehicle, applied to a control unit of the electric vehicle, and comprising:
determining a complete machine state of the electric vehicle according to a power-on signal or a power-off signal of the electric vehicle, wherein the complete machine state comprises any one of a power outage battery management system (BMS) charging mode, a power-on BMS charging mode, a power outage BAT charging mode, a whole machine power-on mode and a whole machine power-off mode; and
determining corresponding control timing logic according to the complete machine state of the electric vehicle, and executing a corresponding operation procedure according to the control timing logic, wherein the operation procedure comprises any one of a charging operation procedure, a power-on operation procedure and a power-off operation procedure.

2. The method for controlling charging, powering on and powering off of an electric vehicle according to claim 1, wherein if the complete machine state of the electric vehicle is the power outage BMS charging mode, the executing a corresponding operation procedure according to the control timing logic comprises:
after receiving a charging instruction, sequentially controlling a low-voltage signal of a high-voltage control box of the electric vehicle to be powered on and a main negative contactor to be powered on; and
after the main negative contactor is powered on, controlling a slow charging contactor of a high-voltage charging gun of the electric vehicle to be powered on, and controlling a high-voltage signal of the high-voltage control box to be powered on to enable BMS of the electric vehicle to charge a battery of the electric vehicle by the high-voltage control box, and controlling a cooling system of the electric vehicle to perform cooling.

3. The method for controlling charging, powering on and powering off of an electric vehicle according to claim 1, wherein if the complete machine state of the electric vehicle is the power-on BMS charging mode, the executing a corresponding operation procedure according to the control timing logic comprises:
controlling a slow charging contactor to be powered on, and charging a battery of the electric vehicle according to an on-off state of a microcontroller unit of the electric vehicle, and controlling a cooling system of the electric vehicle to perform cooling.

4. The method for controlling charging, powering on and powering off of an electric vehicle according to claim 3, wherein the charging the battery of the electric vehicle according to an on-off state of a microcontroller unit of the electric vehicle comprises:
if the on-state of the microcontroller unit is on, controlling the BMS to charge the battery of the electric vehicle in an AC recharge mode; and
if the on-state of the microcontroller unit is off, controlling the BMS to charge the battery of the electric vehicle in an AC charging mode.

5. The method for controlling charging, powering on and powering off of an electric vehicle according to claim 1, wherein if the complete machine state of the electric vehicle is the power outage BAT charging mode, the executing a corresponding operation procedure according to the control timing logic comprises:
sequentially controlling a low-voltage signal of a high-voltage control box and a main negative contactor to be powered on; and
after the main negative contactor is powered on, controlling a high-voltage signal of the high-voltage control box to be powered on, to enable that when a power capacity of a battery of the electric vehicle is less than a first threshold, the BMS charges the battery of the electric vehicle by the high-voltage control box until the power capacity of the battery of the electric vehicle reaches a second threshold, wherein the first threshold is lower than the second threshold.

6. The method for controlling charging, powering on and powering off of an electric vehicle according to claim 1, wherein if the complete machine state of the electric vehicle is the whole machine power-on mode, the executing a corresponding operation procedure according to the control timing logic comprises:
after a low-voltage signal of a high-voltage control box and a low-voltage signal of a microcontroller unit of the electric vehicle are controlled to be powered on, sequentially controlling a main negative contactor and a pre-charge contactor to be powered on; and
after the pre-charge contactor is powered on, controlling a high-voltage signal of the high-voltage control box to be powered on, controlling a PTC contactor to be powered on, controlling a cooling system to perform cooling, and when a motor voltage is greater than a threshold voltage, sequentially controlling a main positive contactor of the electric vehicle to be powered on and the pre-charging contactor to be powered off, wherein
after the controlling a main negative contactor to be powered on, the executing a corresponding operation procedure according to the control timing logic further comprises:
if a motor of the electric vehicle is in a starting state, controlling a high-voltage signal of the microcontroller unit to be powered on.

7. The method for controlling charging, powering on and powering off of an electric vehicle according to any one of claims 1 to 6, wherein if the complete machine state of the electric vehicle is the whole machine power-on mode, according tofurther comprising:
obtaining a running state of the electric vehicle in real time; the running state comprising a state of the BMS, a state of the microcontroller unit and a state of the high-voltage control box; and
performing fault processing if the running state does not meet a preset condition; the fault processing comprising at least one of reducing torque, reducing speed, turning off the motor, and controlling power-off of the BMS.

8. The method for controlling charging, powering on and powering off of an electric vehicle according to any one of claims 1 to 6, wherein if the complete machine state of the electric vehicle is the whole machine power-off mode, the executing a corresponding operation procedure according to the control timing logic comprises:
controlling a high-voltage signal of the microcontroller unit of the electric vehicle to be powered off, to sequentially control a main positive relay of the electric vehicle to be powered off, a high-voltage signal of the high-voltage control box to be powered off, a low-voltage signal of the high-voltage control box to be powered off with time delay and a low-voltage signal of the microcontroller unit to be powered off, and when the main positive contactor, the pre-charge contactor, the slow charging contactor and the PTC contactor of the electric vehicle are all powered off, controlling the main negative contactor to be powered off.

9. Apparatus for controlling charging, powering on and powering off of an electric vehicle, comprising:
a state determination module, configured to determine a complete machine state of the electric vehicle according to a power-on signal or a power-off signal of the electric vehicle, wherein the complete machine state comprises any one of a power outage BMS charging mode, a power-on BMS charging mode, a power outage BAT charging mode, a whole machine power-on mode and a whole machine power-off mode; and
a control module, configured to: determine a corresponding control timing logic according to the complete machine state of the electric vehicle, and execute a corresponding operation procedure according to the control timing logic, wherein the operation procedure comprises any one of a charging operation procedure, a power-on operation procedure and a power-off operation procedure.

10. An electric vehicle, comprising the apparatus for controlling charging, powering on and powering off of an electric vehicle according to claim 9.
